# EUROPEAN PATENT APPLICATION

(11) **EP 2 592 615 A1**
(43) Date of publication of application: **15.05.2013**
(21) Application number: 12162456.3
(22) Date of filing: 30.03.2012
(51) Int. Cl.: G09G 3/288

(54) **Display apparatus and driving method thereof**

(30) Priority: 09.11.2011 KR 20110116541
(71) Applicant: Samsung Electronics Co., Ltd., Suwon-si, Gyeonggi-do, 443-742 (KR)
(72) Inventor: Park, Tae-soon, Gyeonggi-do (KR); Park, Jin-yong, Gyeonggi-do (KR)
(74) Representative: Davies, Robert Ean

(57) **Abstract**

A display apparatus is disclosed. The display apparatus includes a display panel (310) having a scan electrode, a sustain electrode, and an address electrode, a driving unit (320) which supplies a driving voltage to the scan electrode, the sustain electrode, and the address electrode so that each of a plurality of sub fields which form one frame comprise an address section and sustain section, and a control unit (340) which controls the driving unit so that a width of the sustain pulse increases during the sustain section in case of a high load rate as determined by the load detecting unit (330).

## Description

### CROSS-REFERENCE TO RELATED APPLICATIONS

This application claims priority from Korean Patent Application No. 2011-0116541, filed in the Korean Intellectual Property Office on November 9, 2011, the disclosure of which is incorporated herein by reference.

### BACKGROUND

### 1. Field

Methods and apparatuses consistent with the exemplary embodiments relate to a display apparatus and driving method thereof, and more particularly, to a display apparatus which uses a plasma display panel, and a driving method thereof.

### 2. Description of the Prior Art

Recently, flat panel displays such as a Liquid Cristal Displays (LCDs), Field Emission Displays (FEDs), and Plasma Display Panels (PDPs) are being widely developed. Among these, a Plasma Display Panel has the advantages of a high brightness, a high luminous efficiency, and a wide viewing angle when compared to other flat panel displays. Therefore, PDPs are widely received as a replacement for conventional Cathode Ray Tude (CRT) displays.

A PDP includes a fluorescent substance layer formed inside a discharge cell which is divided into partitions, and a plurality of electrodes.

When a driving signal is supplied to an electrode of a PDP, a discharge is generated inside a discharge cell causing gas filled inside the discharge cell to generate a vacuum. This process causes ultraviolet rays to illuminate a fluorescent substance formed inside the discharge cell thereby generating visible light. A plurality of light-producing discharge cells combine to form a pattern which creates an image expressed on a screen of the PDP. A display apparatus using a PDP is formed by a combination of a panel and a driving unit. An upper glass consisting of an X and Y electrode, and a lower glass consisting of a discharge cell portion are attached to a panel unit. The driving unit largely consists of an X electrode driving unit, Y electrode driving unit, and address driving unit, and is driven using an Address Display Separated (ADS) driving scheme. In one possible ADS driving scheme, each frame of video is divided into a number of subfields and each subfield consists of a reset section, an address section, and a sustain section.

When displaying higher gradation frames, the total number of light emission pulses in a display frame (and the consumed power) is higher than when compared to the display of lower gradation frames. The maximum light emission pulse number in a display frame of the whole screen is reached when all the cells are lit with the total light emission pulse number. The ratio of the sum of light emission pulses in all the cells in a display frame to the maximum light emission pulse number is known as the load rate. For instance, the load rate of a display is 0 percent when all the cells are displayed in black, and 100 percent when all the cells are displayed with the maximum brightness.

Some PDPs use shorter sustain pulses when displaying high gradation images in order to reduce the power consumption in the sustain section. However, in such cases, short sustain pulses are concentrated in audible frequencies, which generates audible noise.

### SUMMARY

An aspect of the exemplary embodiments relates to a display apparatus which reduces noise by controlling an electrode driving signal supplied to a panel, and a driving method thereof.

According to an exemplary embodiment of the present disclosure, a display apparatus may include a display panel having a scan electrode, a sustain electrode, and an address electrode; a driving unit which supplies a driving voltage to the scan electrode, the sustain electrode and the address electrode so that each of a plurality of sub fields which form a frame includes an address section and a sustain section; a load detection unit which detects a load rate according to a brightness of an input image; and a control unit which controls the driving unit, wherein the driving unit increases a width of a sustain pulse during the sustain section, in the case where the load rate is greater than or equal to a predetermined value (i.e. qantity, amount, volume, percentage).

The control unit may increase a number of the sustain pulses as a gradation of the input image increases in the case where the load rate is less than the predetermined value, and maintain the number of the sustain pulses to be not more than the predetermined number even if the gradation of the input image increases in the case where the load rate is the greater than or equal to the predetermined value.

The control unit may control the driving unit so that the width of the sustain pulse increases during the sustain section in the case where the number of the sustain pulses is not more than the predetermined number.

The control unit may increase the width of the sustain pulse during the sustain section to adjust the sustain time of each sustain pulse of the plurality of sub fields to be different from one another in the case where the number of the sustain pulses included in the sustain section is not more than the predetermined number.

The control unit may increase the width of the sustain pulse during the sustain section, to disperse an energy concentrated on the sustain pulse.

In the control unit, each of the plurality of sub fields may further include a reset section.

The display panel may be a plasma display panel.

According to an exemplary embodiment of the present disclosure, a driving method of a display apparatus which includes a display panel having a scan electrode, a sustain electrode, and an address electrode, and a driving unit which supplies a driving voltage to the scan electrode, the sustain electrode, and the address electrode so that each of a plurality of sub fields forming a frame includes an address section and a sustain section may include detecting a load rate according to a brightness of an input image; and controlling the driving unit so that a width of a sustain pulse increases during the sustain section, in the case where the load rate is greater than or equal to a predetermined value.

The controlling the driving unit may increase a number of the sustain pulses as a gradation of an input image increases in the case where the load rate is less than a predetermined value, and maintain the number of the sustain pulses to be not more than a predetermined number even if the gradation of the input image increases in the case where the load rate is greater than or equal to the predetermined value.

The controlling the driving unit may control the driving unit so that the width of the sustain pulse increases during the sustain section in the case where the number of the sustain pulses is not more than the predetermined number.

The controlling the driving unit may increase the width of the sustain pulse during the sustain section to adjust the width of the sustain pulse of the plurality of sub fields to be different from one another in the case where the number of the sustain pulses included in the sustain section is not more than the predetermined number.

The controlling the driving unit may increase the width of the sustain pulse during the sustain section, to disperse an energy concentrated on the sustain pulse.

Each of the plurality of sub fields may further include a reset section.

The display panel may be a plasma display panel.

According to an exemplary embodiment of the present disclosure, a recording medium which stores a program which executes a driving method of a display apparatus including a display panel having a scan electrode, a sustain electrode, and an address electrode, and a driving unit which supplies a driving voltage to the scan electrode, the sustain electrode, and the address electrode so that each of a plurality of sub fields includes an address section and a sustain section may include detecting a load rate according to a brightness of an input image; and controlling the driving unit so that a width of a sustain pulse increases during the sustain section in the case where the load rate is greater than or equal to a predetermined value.

According to an exemplary embodiment of the present disclosure, a method driving a display includes detecting a load rate according to a brightness of an input image; determining if the load rate is greater than or equal to a predetermined value; and increasing a width of a sustain pulse in response to the determination, wherein the width of the sustain pulse is increased if the load rate is greater than or equal to the predetermined value.

The method may further include, in response to an increase in a gradation of an input image, increasing a number of the sustain pulses if the load rate is less than the predetermined value, and increasing the width of the sustain pulse and maintaining the number of the sustain pulses if the load rate is greater than or equal to the predetermined value.

Accordingly, noise generated during driving a panel may be reduced.

According to the present invention there is provided an apparatus and method as set forth in the appended claims. Other features of the invention will be apparent from the dependent claims, and the description which follows.

### BRIEF DESCRIPTION OF THE DRAWINGS

For a better understanding of the invention, and to show how embodiments of the same may be carried into effect, reference will now be made, by way of example, to the accompanying diagrammatic drawings in which:

FIGs. 1A to 1D are views for explaining a driving method of a display panel for supporting understanding of the present disclosure;

FIG. 2 is a partial perspective view of a display panel according to an exemplary embodiment of the present disclosure for supporting understanding of the present disclosure;

FIGs. 3A and 3B are views illustrating a configuration consisting of a display apparatus according to an exemplary embodiment of the present disclosure;

FIGs. 4A and 4B are views for explaining a sustain pulse width adjusting method according to an exemplary embodiment of the present disclosure;

FIGs. 5A and 5B are views for explaining the effects according to a sustain pulse width adjusting method according to an exemplary embodiment of the present disclosure; and

FIG. 6 is a flowchart for illustrating a display apparatus driving method according to an exemplary embodiment of the present disclosure.

### DETAILED DESCRIPTION

Certain exemplary embodiments are described in higher detail below with reference to the accompanying drawings.

In the following description, like drawing reference numerals are used for the like elements, even in different drawings. The matters defined in the description, such as detailed construction and elements, are provided to assist in a comprehensive understanding of exemplary embodiments. However, exemplary embodiments can be practiced without those specifically defined matters. Also, well-known functions or constructions are not described in detail since they would obscure the application with unnecessary detail.

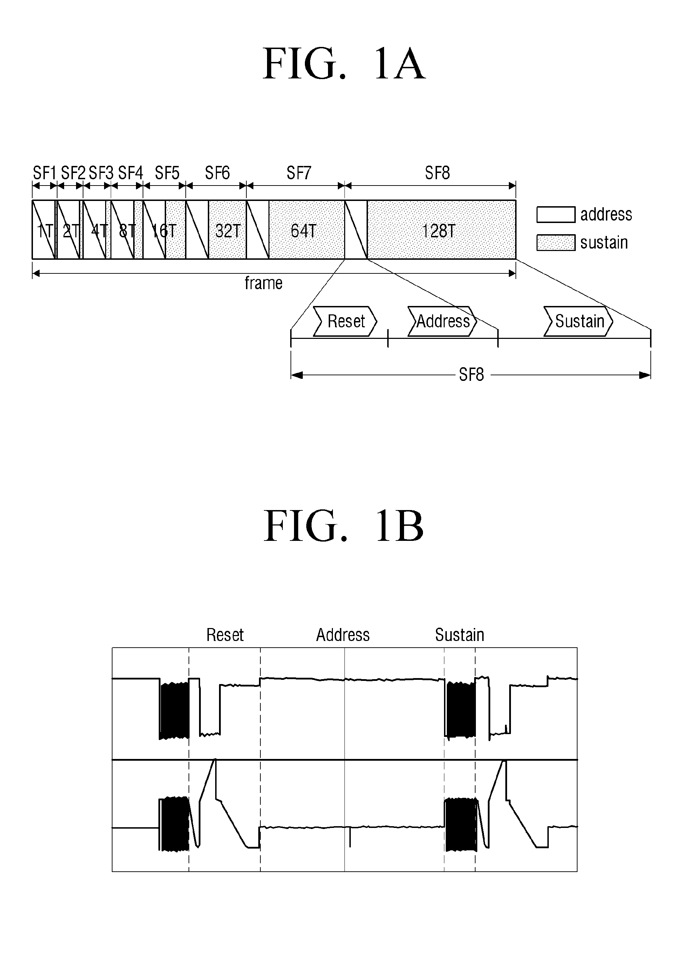

FIGs. 1A to 1D are views for explaining a driving method of a display panel for supporting understanding of the present disclosure.

Herein, the display panel may be embodied as a PDP, but it is not limited to the PDP. However, for convenience of explanation, explanation has been made in the case that the display panel is embodied as a PDP.

As illustrated in FIG. 1A, a frame which expresses images may consist of a plurality of sub fields. According to the illustration, a frame consists of 8 sub fields, but this is an exemplary embodiment, and thus the number of the sub fields may be changed to various numbers.

The brightness of a discharge cell displayed in a sub field is determined by the number of sustain pulses provided. A brightness of 1 may be expressed during sub field 1 (SF 1), a brightness of 2 may be expressed during SF2, and a brightness of 2^{N-1} may be expressed during SFN. By using different combinations of each sub field in a frame, it is possible for a PDP to express 256 or more different gradation levels.

An image consists of 50∼60 frames per second, and about 600 sub fields.

FIG. 1B illustrates a configuration of a sub field, which may include a reset section, an address section, and a sustain section as illustrated.

Herein, the reset section plays a role of erasing a wall charge state of a previous sustain discharge, and setting up a wall charge in order to stably perform a next address discharge. The address section is a section for performing an operation of selecting a cell which is to be turned on and a cell which is not to be turned on in the panel, and piling the wall charge on the cell which is to be turned on (addressed cell). The sustain section is a section for supplying a sustain voltage alternately in a scan electrode and sustain electrode, and performing discharging for actually displaying an image on the addressed cell.

Meanwhile, in terms of the PDP driving method, a voltage of 300V or more may be supplied in the reset section, a voltage of 60V or more may be supplied in the address section, and a voltage of 200V or more may be supplied in the sustain section. When driving the reset and sustain section, on an X or Y electrode unit printed on an upper panel, an electrode of 200V or more takes the form of a pulse, while on an address electrode of a lower panel, since it is in a GND potential state, an electrostatic and a magnetic field are generated by a pulse. The aforementioned electromagnetic field vibrates the attached upper and lower panels and generates noise. Additionally, a vibration is generated by the high current necessary for discharging a panel of a driving unit.

In addition, a frame formed to have a certain length according to the vibration generated by the aforementioned structure, and a sub field of a regular length are driven for about 800-1200 µs(800-1kHz), and frequency energy is concentrated on an audible area (20Hz-20kHz) that can be heard by humans.

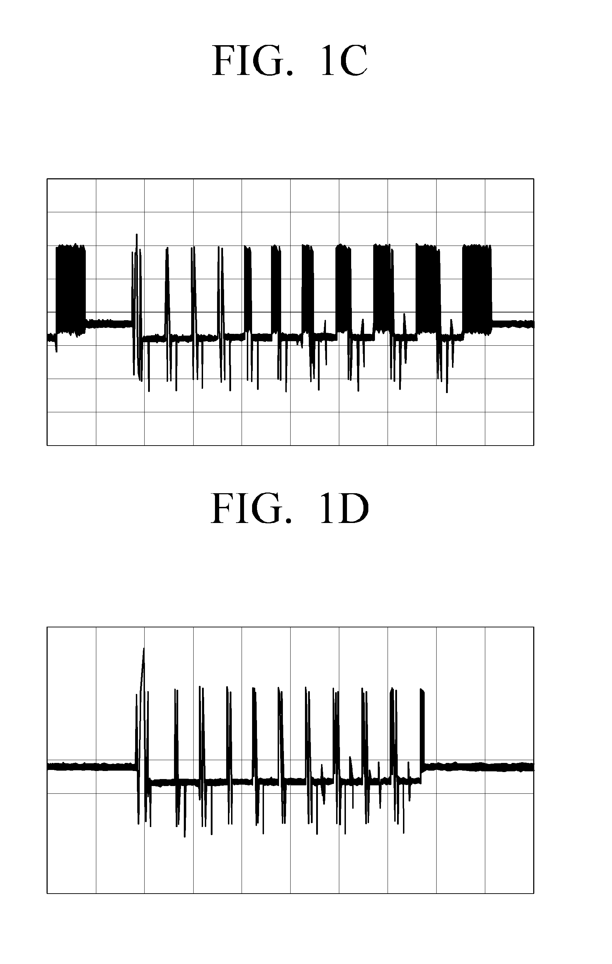

Meanwhile, in the case where a load rate is low, an increase in gradation requires an increase in sustain pulses in order to increase the brightness as illustrated in FIG. 1C. Such a structure changes the cycle of each sub field, varying the frequency of the sustain pulses and preventing loud noise from being generated in the audible frequency range.

However, as illustrated in FIG. 1D, some PDPs reduce power consumption in cases where the load rate is highby using shorter sustain pulses, even though this method reduces brightness when the gradation is high. In this process, when a pattern having high load is displayed, sub fields are repeated on a certain cycle, and energy is concentrated on a particular frequency, generating noise. Accordingly, the present disclosure suggests a method of dispersing the energy concentrated on a particular frequency and thereby reducing noise. Hereinbelow is a detailed explanation on the structure of the present disclosure.

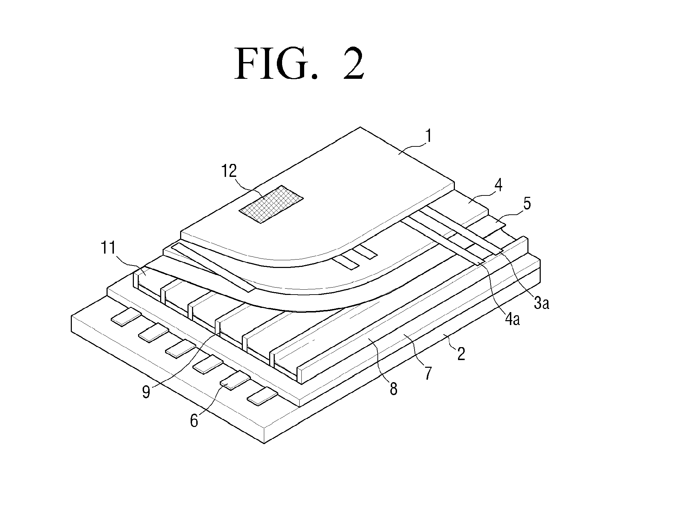

FIG. 2 is a partial perspective view of a display panel according to an exemplary embodiment of the present disclosure.

A display panel illustrated in FIG. 2 may be a self-illuminating display panel, for example, a PDP (Plasma Display Panel), SED (Surface-conduction Electron-emitter Display) and FED (Field Emission Display). Hereinbelow is an explanation on a case where the display panel is embodied as a PDP for convenience of explanation.

As illustrated, the plasma display panel includes two insulation substrates 1, 2 which are separated from each other and face each other.

On a lower part of an insulation substrate 1, a plurality of scan electrodes 3a and sustain electrodes 4a are formed in parallel in pairs, and the scan electrodes 3a and sustain electrodes 4a are covered with dielectric substance 4 and a protection film 5.

On an insulation layer 7 between the two address electrodes 6, a partition 8 is formed. In addition, on a surface of the insulation layer 7 and on both ends of the partition, fluorescent substance 9 is formed

The insulation substrates 1, 2 are placed opposite to each on either side of a discharge space 11. The scan electrode 3a and address electrode 6, and the sustain electrode 4a and address electrode 6 meet at right angles.

A discharge space at the crossing point of the address electrode 6 and the scan electrode 3a and sustain electrode 4a forms a discharge cell 12.

Herein, a wall charge refers to a charge formed on a wall of the discharge cell close to each electrode. Such a wall charge does not actually touch the electrode, but herein the wall charge is explained to be "formed", "accumulated" or "piled up" on the electrode. In addition, a wall voltage refers to a potential difference formed on the wall of the discharge cell by the wall charge.

The partition plays a role of blocking light generated during discharge and preventing a cross talk of a nearby pixel in addition to the function of forming the discharge space. A plurality of such a unit structure is formed in a matrix shape on one substrate. Fluorescent substance is applied to each structure to form one pixel, and these pixels gather to form one plasma display panel. Plasma display panels which are currently being commercialized cause discharge inside each pixel, and ultraviolet rays generated by the discharge separate the fluorescent substance applied to the inner wall of the pixel, expressing a desirable color.

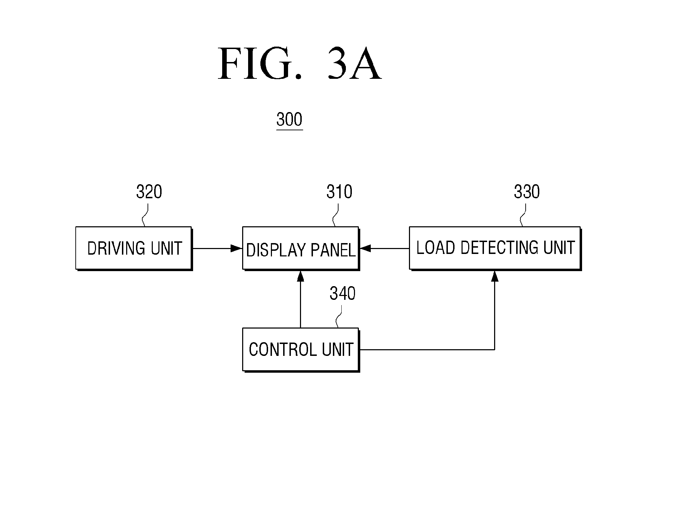

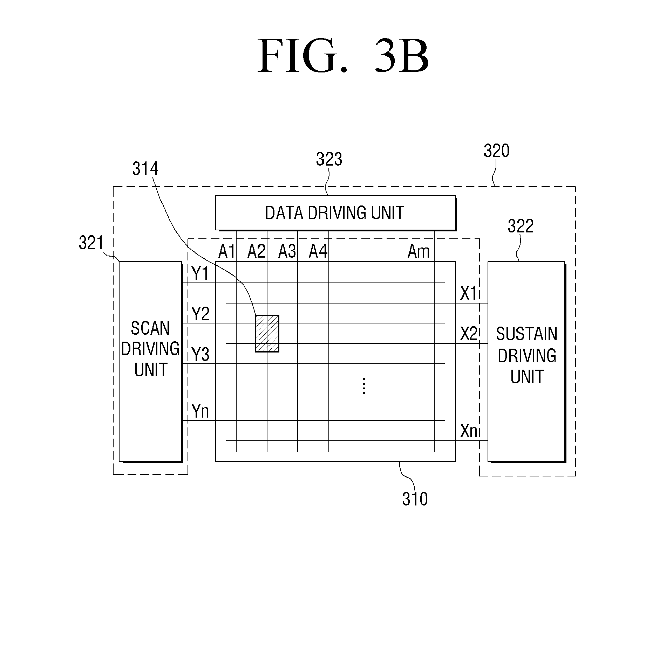

FIGs. 3A and 3B are views illustrating a configuration of a display apparatus according to an exemplary embodiment of the present disclosure.

According to FIG. 3A, a display apparatus 300 according to an exemplary embodiment of the present disclosure includes a display panel 310, driving unit 320, and a control unit 330.

The display panel 310 may be a plasma display panel having a scan electrode, sustain electrode and address electrode. Herein, in the plasma display panel, the scan electrode and sustain electrode may be placed alternately in pairs, and the address electrode may be placed to cross the scan electrode and sustain electrode.

The driving unit 320 may supply a driving signal to the scan electrode, sustain electrode and address electrode, driving the corresponding electrodes.

More specifically, the driving unit 320 may include a data driving unit (not illustrated), scan driving unit (not illustrated), and sustain driving unit (not illustrated).

The data driving unit (not illustrated) may provide a driving signal of the data signal to the address electrodes A1-Am of the display panel 310.

More specifically, the data driving unit (not illustrated) may include a reverse gamma correcting circuit, error diffusion circuit, and sub field mapping circuit (which are not illustrated), and after a reverse gamma correction and an error checking by this configuration, mapped data may be provided to each sub field. Such a data driving unit (not illustrated) responds to a data timing control signal (CTRX) from a timing controller (not illustrated) and samples and ratches the data, and then supplies the data to the address electrodes A1-Am.

The scan driving unit (not illustrated) may provide driving signals such as a scan signal to the scan electrodes Y1-Yn of the display panel 310.

More specifically, the scan driving unit (not illustrated) supplies the sustain pulse of which a number for each unit gradation or length of the sustain time, that is a pulse width has been adjusted according to a gradation value of the sub field during the sustain section under the control of the control unit 330 to the scan electrodes Y1-Yn.

In addition, the scan electrodes (not illustrated) may successively supply the scan pulse Sp of the scan voltage -Vy to the scan electrodes Y1-Yn during the address section, and supply the sustain pulse sus to the scan electrodes Y1-Yn during the sustain section.

The sustain driving unit (not illustrated) may supply driving signals such as a sustain signal to the sustain electrodes X1-Xn of the display panel 310.

Specifically, the sustain driving unit (not illustrated) supplies a predetermined voltage to the sustain electrodes X1-Xn during the period when a descending ramp-down occurs and the address section under control of the timing controller (not illustrated), and alternately operates with the scan driving unit (not illustrated) during the sustain section, supplying the sustain pulse sus, the pulse width of which has been adjusted according to the gradation value of the sub field to the sustain electrodes X1-Xn.

A timing controller (not illustrated) may supply a predetermined timing control signal to a data driving unit (not illustrated), scan driving unit (not illustrated), and sustain driving unit (not illustrated) in order to control a timing of each driving signal.

A load detecting unit 330 plays a function of detecting a degree of load according to a brightness of a screen caused by characteristics of an input image.

The control unit 340 generates a predetermined control signal for controlling the operation timing and synchronization of the scan driving unit (not illustrated) or sustain driving unit (not illustrated) during the reset section, and controls the scan driving unit (not illustrated) or sustain driving unit (not illustrated) by supplying the timing control signal to the scan driving unit (not illustrated) or sustain driving unit (not illustrated).

When the load rate is low, the control unit 340 may use more sustain pulses as the gradation gets higher as illustrated in FIG. 1C. Such a structure changes the cycle of each sub field, varying the frequency of the sustain pulses and preventing loud noise from being generated in the audible frequency range.

However, in the case where the load rate is high, the control unit 340 may reduce the brightness by limiting the number of sustain pulses as illustrated in FIG. 1D, in order to reduce power consumption.

In this case, the control unit 340 may increase the width of the sustain pulse in order to reduce the noise being generated by energy concentration due to using a small number of sustain pulses. Accordingly, the energy concentrated on the sustain pulse is dispersed, reducing noise.

Accordingly, the control unit 340 may increase the width of the sustain pulse when the number of sustain pulses is limited so that the pulse width varies for each sub field.

Additionally, , the present disclosure may further include a driving voltage supply unit (not illustrated) for supplying driving voltage to each driving unit, and the driving voltage supply unit (not illustrated) may supply a setup voltage Vsetup, scan common voltage Vscan-com, scan voltage -Vy, sustain voltage -Vy, sustain voltage Vs, and data voltage Vd. These driving voltages may change according to the configuration of the discharge gas or the discharge cell structure.

FIG. 3B is a view for illustrating the configuration of the display apparatus according to an exemplary embodiment of the present disclosure.

The display panel 310 includes a plurality of data electrodes A1-Am placed in a row direction and a plurality of scan electrodes (or Y electrodes Y1-Yn) and sustain electrodes (or X electrodes X1-Xn) placed in a line direction. The sustain electrodes X1-Xn are formed to correspond to each sustain electrode Y1-Yn, and in general, one end is connected commonly to one another. In addition, the display channel 310 consists of a glass substrate (not illustrated) where the X electrode and Y electrode are placed, and a glass substrate (not illustrated) where the address electrode A1-Am is placed. The two address substrates are placed to face each other inside which a discharge space in such a manner that the Y electrode Y1-Yn and address electrode A1-Am and the X electrode X1-Xn and address electrode A1-Am meet at right angles, respectively. In this case, the discharge space at the crossing point of the address electrode A1-Am and Y electrode Y1-Yn and the X electrode form the discharge cell 311. Herein, the display panel 310 may be embodied as the plasma display panel.

Meanwhile, although not illustrated, the display apparatus 300 may include a base supporting the display panel 310 and a plurality of print circuit boards (PCB) which are mounted to the base and connected to the display panel 310.

Each of the scan electrode, sustain electrode, and address electrode may be connected to the related print circuit boards through a flexible printed circuit (FPC).

For example, the print circuit boards may include a scan board which controls the Y electrode, a sustain board which controls the X electrode, and an address board which controls the address electrode.

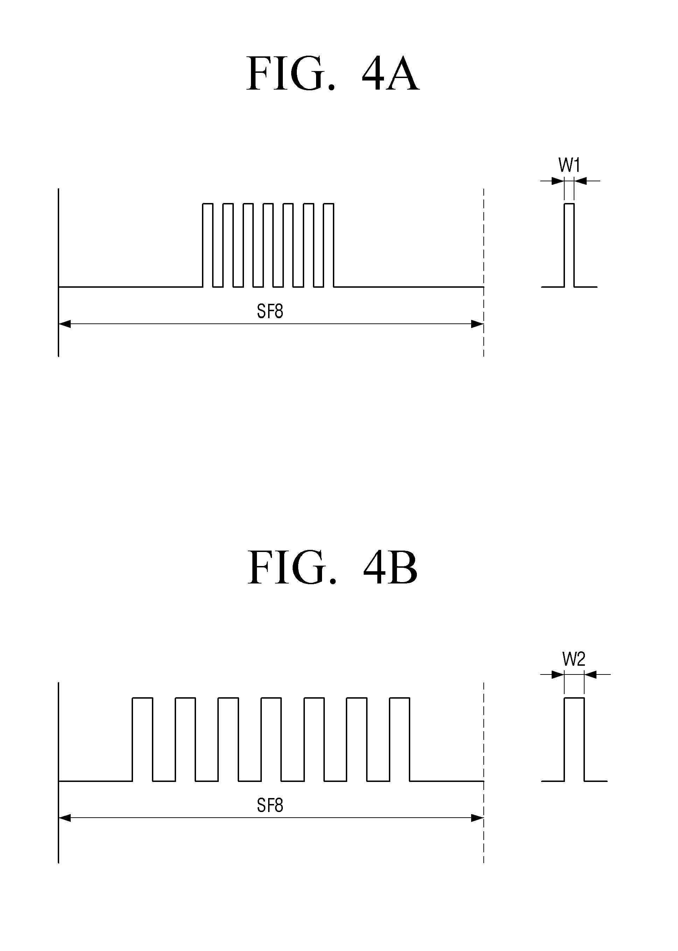

FIGs. 4A and 4B are views for explaining a sustain pulse width adjusting method according to an exemplary embodiment of the present disclosure.

FIG. 4A and 4B explain the sustain pulse width adjusting method of the 8^{th} sub field SF8 of the frame configuration illustrated in FIG. 1A. However, the pulse width adjusting method is not only applied to the 8^{th} sub field SF8 but can also be applied to the remaining sub fields SF1-SF7.

As illustrated in FIG. 4A, in the case where the load rate is high, it is possible to adjust the number of sustain pulses to be not more than the predetermined number in order to reduce the power consumption, while adjusting the existing width w1 to be broader like w2, as illustrated in FIG. 4B. Accordingly, the sustain time may become longer, which disperses energy and reduces noise.

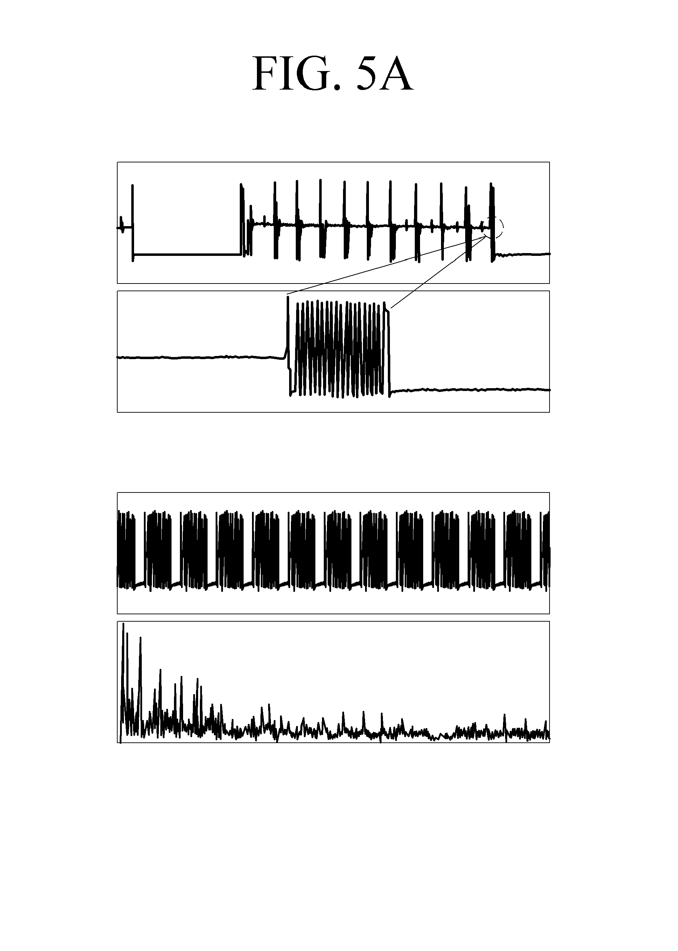

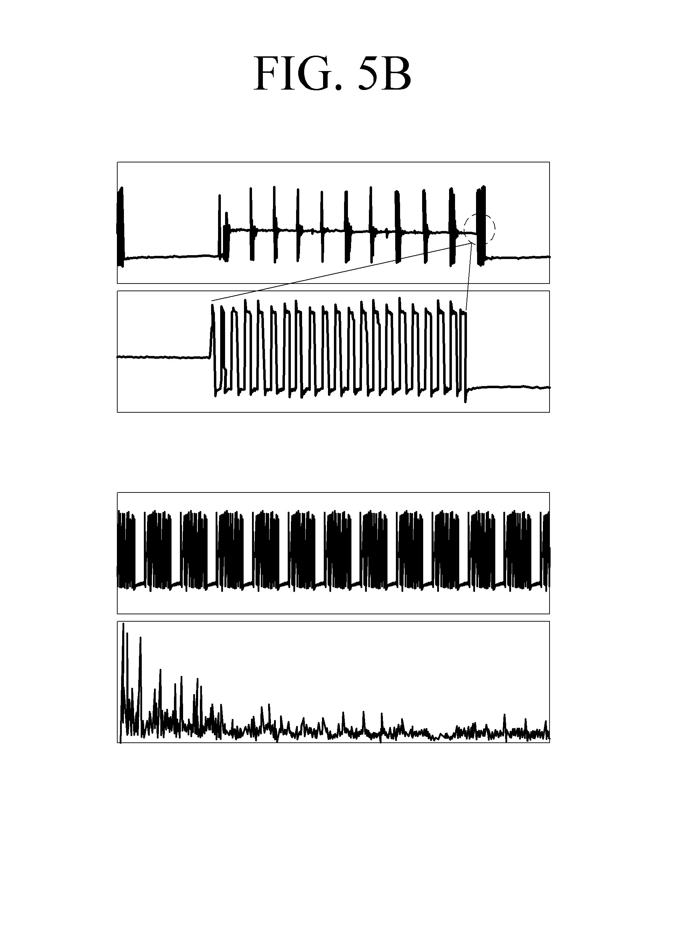

FIG. 5A and 5B are views for explaining the effects according to the sustain pulse width adjusting method according to an exemplary embodiment of the present disclosure.

As illustrated in FIG. 5A, according to the conventional driving method, in the case where the number of the sustain pulses is small, the frequency of the sustain pulses is concentrated in the audible spectrum, causing noise.

However, in the case of the present disclosure as illustrated in FIG. 5B, when the number of sustain pulses is small, the present disclosure increases the width of the corresponding sustain pulses, varying the frequency of the sustain pulses and reducing the noise.

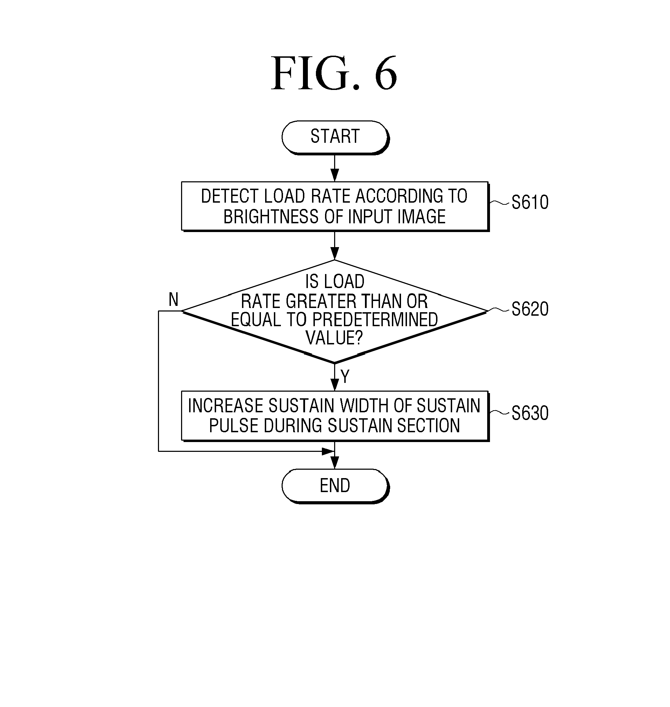

FIG. 6 is a flowchart for explaining a display apparatus driving method according to an exemplary embodiment of the present disclosure.

The display apparatus for embodying the display apparatus driving method illustrated in FIG. 6 may include display panel having a scan electrode, sustain electrode and address electrode, and a driving unit which supplies a driving voltage to the scan electrode, sustain electrode and address electrode so that each of a plurality of sub fields forming one frame includes an address section and sustain section. In addition, each of the sub fields may further include a reset section. Meanwhile, herein, the display panel may be embodied as a plasma display panel.

The driving method of the display apparatus illustrated in FIG. 6 detects the load rate according to the brightness of the input image (S610).

Subsequently, the driving method determines whether or not the detected load rate is greater than the predetermined value (S620).

In the case where the detected load rate is greater than or equal to the predetermined value (S620:Y), it is possible to increase the width of the sustain pulse during the sustain section.

In the case where the load rate is smaller than the predetermined value, it is possible to increase the number of the sustain pulses as the gradation of the input image increases, and in the case where the load rate is the same or greater than the predetermined value, it is possible to maintain the number of the sustain pulses even if the gradation of the input image increases.

Herein, in S630, in the case where the number of the sustain pulses is not greater than or equal to the predetermined number, it is possible to increase the width of the sustain pulse during the sustain section. Accordingly, it is possible to vary the pulse width of the sustain pulse in each of the plurality of sub fields.

In addition, it is possible to increase the width of the sustain pulse during the sustain section, thereby dispersing the energy concentrated on the sustain pulse. Accordingly, the noise is reduced.

Meanwhile, an exemplary embodiment of the present disclosure may include a storage medium, that is a computer readable recording medium which includes a program for executing the driving method of the display apparatus. The computer readable recording medium includes all kinds of record apparatuses where data which can be read by a computer system is stored. ROM, RAM, CD-ROM, magnetic tape, floppy disk, optical data storage apparatus are examples of the computer readable recording medium, and the computer readable recording medium may be dispersed in the computer system connected to the network, and codes readable by the computer may be stored and executed by the disperse method.

As aforementioned, according to the present disclosure, it is possible to reduce the noise which is the same or more than 800 Hz which is generated as the sub fields are regularly driven in a pattern where the number of the sustain pulses is small. Accordingly, it is possible to increase the viewing angle of the viewing screen even when displaying images having big loads.

Although a few embodiments have been shown and described, it would be appreciated by those skilled in the art that changes may be made in this embodiment without departing from the principles and spirit of the disclosure, the scope of which is defined in the claims and their equivalents.

## Claims

1. A display apparatus comprising:
a display panel having a scan electrode, a sustain electrode, and an address electrode;
a driving unit which supplies a driving voltage to the scan electrode, the sustain electrode and the address electrode so that each of a plurality of sub fields which form a frame comprises an address section and a sustain section;
a load detection unit which detects a load rate according to a brightness of an input image; and
a control unit which controls the driving unit,
wherein the driving unit increases a width of a sustain pulse during the sustain section, in the case where the load rate is the greater than or equal to a predetermined value.

2. The display apparatus according to claim 1, wherein the control unit increases a number of the sustain pulses as a gradation of the input image increases in the case where the load rate is less than the predetermined value, and maintains the number of the sustain pulses to be not more than the predetermined number even if the gradation of the input image increases in the case where the load rate is greater than or equal to the predetermined value.

3. The display apparatus according to claim 2, wherein the control unit controls the driving unit so that the width of the sustain pulse increases during the sustain section in the case where the number of the sustain pulses is not more than the predetermined number.

4. The display apparatus according to claim 2, wherein the control unit increases the width of the sustain pulse during the sustain section to adjust the sustain time of each sustain pulse of the plurality of sub fields to be different from one another in the case where the number of the sustain pulses included in the sustain section is not more than the predetermined number.

5. The display apparatus as claimed in any one of claims 1 to 4, wherein the control unit increases the width of the sustain pulse during the sustain section, to disperse an energy concentrated on the sustain pulse.

6. The display apparatus as claimed in any one of claims 1 to 5, wherein in the control unit, each of the plurality of sub fields further includes a reset section.

7. The display apparatus as claimed in any one of claims 1 to 6, wherein the display panel is a plasma display panel.

8. A driving method of a display apparatus which comprises a display panel having a scan electrode, a sustain electrode, and an address electrode, and a driving unit which supplies a driving voltage to the scan electrode, the sustain electrode, and the address electrode so that each of a plurality of sub fields forming a frame comprises an address section and a sustain section, the driving method comprising:
detecting a load rate according to a brightness of an input image; and
controlling the driving unit so that a width of a sustain pulse increases during the sustain section, in the case where the load rate is the same or greater than a predetermined value.

9. The driving method according to claim 8, wherein the controlling the driving unit further comprises increasing a number of the sustain pulses as a gradation of an input image increases in the case where the load rate is less than a predetermined value, and maintains the number of the sustain pulses to be not more than a predetermined number even if the gradation of the input image increases in the case where the load rate is greater than or equal to the predetermined value.

10. The driving method according to claim 9, wherein the controlling the driving unit further comprises controlling the driving unit so that the width of the sustain pulse increases during the sustain section in the case where the number of the sustain pulses is not more than the predetermined number.

11. The driving method according to claim 9, wherein the controlling the driving unit further comprises increasing the width of the sustain pulse during the sustain section to adjust the width of the sustain pulse of the plurality of sub fields to be different from one another in the case where the number of the sustain pulses included in the sustain section is not more than the predetermined number.

12. The driving method as claimed in any one of claims 8 to 11, wherein the controlling the driving unit increases the width of the sustain pulse during the sustain section, to disperse an energy concentrated on the sustain pulse.

13. The driving method as claimed in any one of claims 8 to 12, wherein each of the plurality of sub fields further includes a reset section.

14. The driving method as claimed in any one of claims 8 to 13, wherein the display panel is a plasma display panel.

15. A recording medium which stores a program which executes a driving method of a display apparatus comprising a display panel having a scan electrode, a sustain electrode, and an address electrode, and a driving unit which supplies a driving voltage to the scan electrode, the sustain electrode, and the address electrode so that each of a plurality of sub fields comprises an address section and a sustain section, the driving method comprising:
detecting a load rate according to a brightness of an input image; and
controlling the driving unit so that a width of a sustain pulse increases during the sustain section in the case where the load rate is greater than or equal to a predetermined value.
